# EUROPEAN PATENT APPLICATION

(11) **EP 1 767 343 A1**
(43) Date of publication of application: **28.03.2007**
(21) Application number: 05760006.6
(22) Date of filing: 15.06.2005
(51) Int. Cl.: B32B 15/08, B32B 15/20, B64C 1/00

(54) **LAMINATED COMPOSITE MATERIAL AND A PRODUCT MADE THEREOF**

(30) Priority: 14.07.2004 RU 2004121410
(71) Applicant: Federalnoe Gosudarstvennoe Unitarnoe predpriyatie "Vserossiysky Nauchno-Issledovatelsky Institut Aviatsionnykh Materialov", 105005 Moscow (RU)
(72) Inventor: FRIDLYANDER, Iosif Naumovitch, Moscow, 125080 (RU); KABLOV, Evgeny Nikolaevitch, Moscow, 101000 (RU); ANIKHOVSKAYA, Lyubov Ivanovna, Moscow, 108240 (RU); SENATOROVNA, Olga Grigorjevna, Moscow, 119270 (RU); ANTIPOV, Vladislav Valerievitch, Moscow, 117405 (RU); KARIMOVA, Svetlana Alekseevna, Moscow, 111395 (RU); LYAMIN, Aleksey Borisovitch, Moscow, 119311 (RU); SIDELNIKOV, Vasily Vasiljevitch, Moscow, 109387 (RU)
(74) Representative: HOFFMANN EITLE
(86) International application number: PCT/RU2005/000329
(87) International publication number: WO 2006/009489

(57) **Abstract**

The invention relates to laminated hybrid alumopolymer materials comprising alternating sheets of aluminium alloys and layers of reinforced polymer composite material, such laminated materials are intended for use as structural sheet material for loaded parts of airframe (skins, partitions, stringers of fuselage and wings, floor panels, etc.) and for the repair thereof, and also for surface transport parts. There is suggested the composite laminated material comprising the alternating Al sheets and layers of glass fibre-reinforced plastic including the thermosetting binder and reinforcing filler, said composite material is **characterized in that** the aluminium sheets comprise at least two layers, one of which is made of high-modular Al-Li alloy of reduced density with Li content of more than 1.5%, and the other one is made of the alloy of Al-Mg-Si system, with layers' thicknesses ratio being (70-12):1. In the composite material the layer of A1-Mg-Si alloy appears to be outer with respect to the composite material and has the ultimate strength not less than 260 MPa, yield strength not less than 220 MPa, elongation not less than 10% and stationary electrochemical potential not less than 20 mV more negative than that of Al-Li alloy. The article fabricated from said composite material is also suggested.

The technical result is the invented laminated composite material having the improved properties of technological plasticity in the course of shaping process of the articles, and the corrosion resistance, and also other high service characteristics.

## Description

### TECHNICAL FIELD

The invention relates to laminated hybrid alumopolymer materials comprising alternating sheets of aluminium alloys and layers of reinforced polymer composite material, such laminated materials are intended for use as structural sheet material for loaded parts of airframe (skins, partitions, stringers of fuselage and wings, floor panels, etc.) and for the repair thereof, and also for surface transport parts.

### BACKGROUND ART

Well-known are the composite laminated alumopolymer materials consisting of aluminium sheets and interlayers of glass-reinforced plastic. The materials of that type are developed by AKZO NV (NL) and have the trademark GLARE (Glass + Aluminium + Reinforced). They consist of thin sheet alloys of traditional systems

Al-Cu (2024- 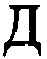 16 type), Al-Zn (7075-B95 type) and interlayers of glass-reinforced plastic, which interlayers comprise continuous glass filaments having elastic modulus of 80-100 GPa, and thermoplastic or thermoset binder. Such materials are recommended to be used in aircraft fuselage [1].

There are Russian laminated alumo-glass reinforced-plastics based on Al alloys and having the trademark 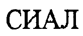 (Glass-and-Aluminium) [2].

The main disadvantage of such laminated alumopolymer composite materials (said disadvantage is stipulated by the properties of glass- reinforced plastics layers) is the reduced (by 10-30%) elastic modulus as compared with the main structural aluminium alloys. This fact leads to the reduced stiffness of parts and also limits their usage, for example, in the skins of wide-fuselage aircraft. Besides that, the composites have the density to some extent higher (up to 8-10%) than the density of prior art laminated alumoorganoplastic materials of the type AJIOP (ARALL).

Also known is the composite laminated material comprising alternating sheets of aluminium high-modular alloy of reduced density with Li content of more than 1.5%, and layers of glass-reinforced-plastics based on thermosetting binder and reinforcing filler in the form of high strength, high modular glass fibres [3].

As the laminated material includes thin sheets of Al-Li alloy, preferably of Al-Li-Cu-Mg type, having high (not less than 77000 MPa) elastic modulus and reduced (not more than 2600 kg/m³) density instead of the sheets made of traditional middle-strength alloys of "duralumin" type (Al-Li-Cu-Mg system) having elastic modulus of 71500 MPa and density of 2770 kg/m³, this fact provides the increasing (on the whole) of elastic modulus for tension and compression of laminated alumo-glass fibre-reinforced plastics by ~10% (up to more than 60000 MPa), thereby bringing it nearer to the modulus of aluminium alloys, and also additionally reducing density (substantially up to 2300-2400 kg/m³).

Besides that, for providing the integrity of glass fibre-reinforced plastic layer and its reliable bond with Al sheets, the modified thermosetting binder having high curing temperature (up to 180°C) is used.

The disadvantages of this laminated alumo-glass fibre-reinforced plastic are as follows:
- composite material based on Al-Li alloy sheets has unsufficient technological plasticity in the course of the shaping process of articles; this fact does not permit to produce parts with small bending radius (Rₘᵢₙ), increased stretching and narrows the field of parts' usage;
- in the structure of thin monolithic sheets of Al-Li alloys (from which the composite material is comprised) there is no reliable electrochemical surface corrosion protection which in turn leads to reducing the corrosion resistance of composite material and the articles made thereof, particularly under the sea conditions.

### DISCLOSURE OF THE INVENTION

The object of the present invention is provide the composite laminated material based on the sheets of high-modular Al-Li alloy with reduced density, and glass fibre-reinforced plastic layers having increased technological plasticity in the shaping process of articles, and corrosion resistance while preserving the increased elastic modulus, the reduced density, high strength, fatigue crack resistance and other service properties; said composite material is proposed to be used as a structural material for main loaded elements of airframe in aircraft and other surface transport parts.

Accordingly, there is provided the composite laminated material comprising the alternating Al sheets and layers of glass fibre-reinforced plastic including the thermosetting binder and reinforcing filler, said composite material is characterized in that the aluminium sheets comprise at least two layers, one of which is made of high-modular A1-Li alloy of reduced density with Li content of more than 1.5%, and the other one is made of the alloy of Al-Mg-Si system, with layers' thicknesses ratio being (70-12):1. In the composite material the layer of Al-Mg-Si alloy appears to be outer with respect to the composite material and has the ultimate strength not less than 260 MPa, yield strength not less than 220 MPa, elongation not less than 10% and stationary electrochemical potential not less than 20 mV more negative than that of Al-Li alloy. The article fabricated from said composite material is also suggested.

As the composite material comprises aluminium laminated sheets which have one layer made of high-modular light Al-Li alloy and the next one is made of Al-Mg-Si alloy being more plastic, this fact provides performing deformation to a great degree and to avoid defects in articles' fabrication process, that is why it becomes possible to broaden the usage of the articles and to simplify the technological process of their production.

One of the main advantages of the suggested laminated aluminium sheets is their improved corrosion resistance as a consequence of high total corrosion resistance of outer layers of Al-Mg-Si alloy which also performs the electrochemical (anodic) protection of inner A1-Li alloy layers when the outer layers are damaged (their integrity is broken), and also upon the end faces of the sheets. All the abovesaid promotes the reliable corrosion resistance of the composite material on the whole.

The suggested thicknesses' ratio of the layers made of Al alloys (A1-Li and Al-Mg-Si) in the aluminium sheets provides forming of the optimal set of properties of the composite alumopolymer material. When this ratio is minimum, the material has the best technological plasticity and corrosion resistance. When this ratio is maximum, the material has the highest level of strength, resilience and minimum density. If the values are out of said ratio limits (<12 and >70) then the desired properties combination of the composite laminated material can't be ensured, especially for the crucial parts of aircraft.

Besides that, the outer layers of Al-Mg-Si alloy, with respect to the composite material, are superior in technological effectiveness when the adhesive oxide film is applied in the process of preparing the aluminium sheets' surfaces for bonding (forming) the composite, and also additionally ensure the high quality of decorative oxide films on the outer surface of composite material.

The essential factor is the compatibility of the alloys of the inner and outer layers in aluminium sheets within temperature-time parameters of the strengthening heat treatment. In their turn said parameters are compatible with the high (up to 180°C) curing temperature of the modified adhesive binder being used in the invention, for creating the reliable bond between the metallic sheets and polymer layers and for increasing the service temperature of the composite material.

### BEST MODES FOR CARRYING OUT INVENTION

Under experimental conditions there were shaped three-layer sheets of composite material with the dimensions 650x650 mm; said sheets comprised two thin laminated aluminium sheets having different ratio of thicknesses of inner layer (Al-Li alloy) and outer layer (Al-Mg-Si alloy), and one layer of glass-reinforced plastic reinforced by unidirectional, high strength, high modular glass fibres in the binder based on modified epoxy resins.

Table 1 shows the characteristics of structure and properties of the components of the invented material (Examples 1, 2, 3) and of the composite laminated material described in RU 2185204 (Example 4), both based on laminated aluminium sheets and glass-reinforced plastic layers.

The laminated aluminium sheets of 0.35 mm thickness have been pretreated by degreasing, etching, anodic oxidizing in chromic or phosphoric acids and then coated by the adhesive primer with the help of a sprayer. The pretreated sheets were placed on a plate and then there was performed the layer-by-layer superimposition of aluminium sheets and prepreg monolayers according to desired orientation of reinforcing glass fibres and aluminium sheets' rolling direction, thereby creating the desired structure of the composite material.

The composite sheets shaping was performed in autoclave "Scholz" with working space of ∅ 800×2000 mm and also by pressing method at different high curing temperatures of the modified binder.

The microstructure and the regulated thicknesses' ratio of the layers in aluminium sheets, the structure and volume composition of components in the sheets made of the invented composite material were controlled by the methods of quantitative microstructural analysis in optical microscopes using sections cut from different zones.

Mechanical properties were investigated using the specimens cut from laminated aluminium sheets and laminated composite materials.

Mechanical tensile properties (ultimate tensile strength σ_{B}, elastic modulus E) were determined using the specimens with the width of the working part 10-15 mm and in accordance with GOST 1497-84.

Crack resistance (fatigue crack propagation rate) was investigated using the specimens with the dimensions 140x420 mm, the initial central perforation of Ø 4 mm and the notch 21₀ ≈ 6 mm under the following conditions of the fatigue load:
σₘₐₓ = 120 MPa; R = 0; f = 5 Hz.

The density of the composites was determined by the hydrostatic weighing method.

The minimum allowable radius of bending Rₘᵢₙ for the angle of 90° which appears to be the main factor determining the material's ability to be deformed by bending strain in the course of sheets forging, was studied using the specimens with the dimensions 40x60 mm.

The investigations of the electrochemical properties of aluminium alloys (stationary potentials, anodic polarization curves) were performed in the 3% solution of NaCl using the impulse potentiostat. The sheet specimens with outer A1-Mg-Si layer were investigated, and then the specimens consisting only of inner Al-Li layers (Al-Mg-Si layer has been etched away).

Table 2 shows mechanical, physical, technological and corrosion properties of the sheets made of the inventive material (Examples 1, 2, 3) and of the prior art (Example 4) composite material. Examples 1, 2- using the two-layer aluminium sheets having one outer Al-Mg-Si layer; Example 3 - using three-layer aluminium sheets having two outer Al-Mg-Si layers.

The results set forth in Table 2 show that the structure and the composition of the invented laminated alumo-glass reinforced plastic allow to increase by 10-35% the ability of the material to be subjected to deformation in the course of the shaping process thereby approaching the indexes of the composite material based on Al-Cu-Mg sheets. They also ensure the reliable electrochemical (anodic) protection of the aluminium sheets from corrosion due to the fact that the potential of their outer layers is more negative than that of their inner layers. Moreover, the composite has the reduced density while preserving the high level of strength, modulus of elasticity and resistance to fatigue crack propagation.

Thus, the suggested more technologically effective, corrosion resistant, high modular, light weight, high strength, crack resistant laminated composite material expands the abilities and technological effectiveness of the articles' manufacture, ensures the increase in service life, reliability, weight effectiveness, service temperature range of the articles. The material is particularly suited to be formed into sheets, plates, bent shapes.

The laminated composite material comprising alternating sheets of aluminium alloys and layers of glass-reinforced-plastic is proposed for use as an effective structural material for structural material for the main parts of airframe (skins, partitions, stringers of fuselage and wing, floor panels, etc.) and for the repair thereof (as a crack propagation stopper), and also for the articles of surface transport and other vehicles instead of structural monolithic aluminium alloys.

**Table 1.**

| **The characteristics of components of alumo-glass reinforced-plastics.** | | |
|---|---|---|
| **Characteristic** | **Examples 1, 2, 3** | **Example 4** |
| **Aluminium sheets** | | |
| Layers of the alloy Al-1.7% Li-Cu-Mg | | |
| Modulus of elasticity for tension E, MPa | 81000 | 81000 |
| Density d, kg/m³ | 2580 | 2580 |
| Ultimate strength σ_{B}, MPa | 450 | 450 |
| Ultimate yield strength σ_{0.2}, MPa | 345 | 345 |
| Elongation δ, % | 10 | 10 |

| Layers of the alloy Al-Mg-Si | | |
|---|---|---|
| Modulus of elasticity E, MPa | 72000 | - |
| Density d, kg/m³ | 2710 | - |
| Ultimate strength σ_{B}, MPa | 310 | - |
| Ultimate yield strength σ_{0.2}, MPa | 260 | - |
| Elongation δ, % | 17 | - |

| **Glass fibres** | | |
|---|---|---|
| Diameter, mm | 10 | 10 |
| Modulus of elasticity E, MPa | 90000 | 90000 |
| Density d, kg/m³ | 2550 | 2550 |

| **Thermosetting binder** | | |
|---|---|---|
| Curing temperature, °C | 172 | 172 |

**2. A set of properties of composite laminated materials produced by the suggested method and by the prior art method.**

| Examples | Layers of Al-Li and Al-Mg-Si alloys in Al sheets | | Ultimate strength, σ_{B}, MPa | Modulus of elasticity, E, GPa | Density d, kg/m³ | Fatigue crack propagation rate, dl/dN mkm/cycle (ΔK=31MPa√m) | Minimum radius of bending, Rₘᵢₙ | Stationary electrochemical potential, mV |
|---|---|---|---|---|---|---|---|---|
| | Ratio | Thickness, mkm | | | | | | |
| 1 | 70:1 | 350:5 | 875 | 73 | 2360 | 0.09 | 5.0 S^{*} | -635 |
| 2 | 40:1 | 360:9 | 870 | 72 | 2370 | 0.08 | 4.5 S | -660 |
| 3 | 1:24:1** | 14:336:14 | 860 | 71 | 2390 | 0.08 | 4.0 S | -675 |
| 4 | 100:1 | 350 | 870 | 73 | 2350 | 0.09 | 5.5 S | -590 |

| | | | | | | | | |
|---|---|---|---|---|---|---|---|---|
| ^{*}S - composite's thickness ^{**} Ratio of inner layer (Al-Li alloy) thickness to 2 outer layers' (Al-Mg-Si alloy) thickness - 12:1 | | | | | | | | |

### REFERENCES CITED

1. Patent US Nº 5.039.571.
2. J.N. Fridlyander, L.I. Anikhovskaya, O.G. Senatorova et al. The Structure and Properties of (Glass/Epoxy - Aluminium) Laminates. Proc. of ICAA-6, Japan, 1998.
3. Patent RU Nº 2185964.

## Claims

1. Laminated composite material comprising alternating aluminium sheets and layers of glass-reinforced-plastic based on thermosettihg binder and reinforcing filler; said composite material is **characterized in that** the aluminium sheets comprise at least two layers, one of which is made of high-modular Al-Li alloy of reduced density with Li content of more than 1.5%, and the other one is made of the alloy of Al-Mg-Si system, with layers' thicknesses ratio being (70-12):1.

2. The laminated composite material according to p. 1 **characterized in that** the layer of the aluminium sheet made of Al-Mg-Si alloy appears to be outer with respect to the composite material.

3. The laminated composite material according to p. 1 **characterized in that** the layer of the aluminium sheet made of Al-Mg-Si alloy has the ultimate strength not less than 260 MPa, yield strength not less than 220 MPa, elongation not less than 10% and stationary electrochemical potential not less than 20 mV more negative than that of Al-Li alloy.

4. The article fabricated from laminated composite material **characterized in that** said article is fabricated from the material according to pp. 1-3.
